# EUROPEAN PATENT APPLICATION

(11) **EP 1 662 100 A2**
(43) Date of publication of application: **31.05.2006**
(21) Application number: 05257109.8
(22) Date of filing: 17.11.2005
(51) Int. Cl.: F01M 11/04

(54) **Apparatus and method for reconditioning oil**

(30) Priority: 26.11.2004 GB 0426077
(71) Applicant: Nissan Technical Centre Europe Ltd, Bedfordshire MK43 0DB (GB)
(72) Inventor: Turnell, David c/oNissan Tech. Centre Europe Ltd, Bedfordshire MK43 0DB (GB)
(74) Representative: Holmes, Matthew William

(57) **Abstract**

An apparatus for reconditioning oil in an internal combustion engine lubricating system while the lubricating system is not in operation comprises a filter (14) for filtering the oil, a pump (16) for supplying the oil to be filtered to the filter (14) from the engine lubricating system and a return path for returning the filtered oil to the engine lubricating system.

## Description

The invention relates to an apparatus and method for reconditioning oil in an internal combustion engine, and more specifically for the reconditioning of oil stored in an oil sump or reservoir of an internal combustion engine while the engine is switched off.

The efficient working of an internal combustion engine requires an effective lubricating system and lubricant, such as oil. Through normal use, however, the lubricating properties and hence the effectiveness of the oil gradually decrease due partly to the degradation of the oil over time and also because of a build up of carbon deposits and other contaminants, which can result in shortening the life of the engine.

Most internal combustion engines of cars and other vehicles are equipped with a full flow oil filter within their lubricating system through which the entire circulating oil stream is passed before being supplied to the engine. These full flow oil filters have a relatively coarse filtering media in order to be able to pass the entire volume of circulating oil and typically filter particles larger than 25 µm. Smaller contaminant particles and debris, however, are able to pass through the filter and access the engine.

Through use, the oil flow can become restricted due to particulate and contaminant build up at the full flow filter. When the pressure drops excessively across the full flow filter, the oil flow is directed through an unfiltered bypass valve, effectively rendering the full flow filter useless. To avoid such a scenario and avoid damaging the engine, it is recommended to regularly change the full flow oil filter to clear contaminant build-up, and the oil to remove the small contaminants from the lubricating system.

Car manufacturers recommend changing the oil and the filter in a car engine at set specified service intervals, typically around every 10,000 miles. This typical service interval provides the manufacturer with confidence regarding warranties but is not necessarily the correct time to change the oil for any given car. The actual lifetime of the oil in a car engine, which should determine when the oil and filter requires changing, varies according to a number of factors including the nature of the driving conditions such as stop-start traffic, number of cold starts, ambient temperature, condition of wear of the engine, accuracy of carburation during warm-up period and total distance travelled.

For the majority of domestic users, the specified service interval may be too short resulting in unnecessary expense and time off the road for the car owner while the oil and filter are changed. By discarding oil which does not need to be discarded, there is also the consideration of wasting of limited natural resources. The converse may be true for fleet cars which have relatively heavy usage and may require their oil and filter to be changed more frequently than the specified service interval. Manually checking the colour of the oil in the oil reservoir or sump is possible but this an extremely subjective test for assessing whether it is time for the oil to be changed and depends on the experience and knowledge of the car user. Further, renewing the oil and filter is a notoriously messy procedure and the old oil must be discarded with care due to its toxicity and damage to the environment, engine lubricating oil being a major source of soil, groundwater and surface water pollution.

Bypass oil filter systems exist which are designed to be used with the existing full flow filter and lubricating system of car engines during the normal running of a car. The bypass filter systems use filter media able to filter particles as small as 1 µm. As such filters would become blocked quite quickly and reduce the flow rate of the circulating oil if placed in series within the circulating oil stream, the bypass system is positioned in parallel with the circulating oil stream such that only a portion of the main oil stream is directed through the bypass filter and the filtered oil returned to the oil reservoir. Although these bypass filter systems do help to extend the lifetime of the circulating oil, it is only to a limited extent as only approximately 10% of the total oil flow is diverted through the bypass filter in a continuous cycle. Additionally, the running of the by-pass system increases fuel consumption, and the by-pass system, once installed, operates regardless of the quality of the engine oil.

In light of the above, it is desirable to extend the time between service intervals by maintaining the lubricating qualities of the circulating oil at an acceptable level for longer.

Accordingly, it is one object of the present invention to provide an apparatus and a method for reconditioning oil which minimises the disadvantages of the current filter systems as outlined above.

According to a first aspect of the present invention, there is provided an apparatus for reconditioning oil in an internal combustion engine lubricating system while the lubricating system is not in operation, the apparatus comprising a filter for filtering the oil, a pump for supplying the oil to be filtered to the filter from the engine lubricating system, and a return path for returning the filtered oil to the engine lubricating system. By filtering the oil, the lifetime of the internal combustion engine is prolonged by reducing engine wear and deposition.

Preferably, the apparatus further comprises means for determining that the lubricating system is not in operation and means for automatically switching off the pump if the determining means verifies that the lubricating system is in operation. Alternatively, the apparatus may comprise means for determining that the lubricating system is in operation and means for activating the pump if the lubricating system is not in operation.

Advantageously, as the apparatus can only preferably be used while the lubricating system is not in operation, all of the oil in the internal combustion engine lubricating system can be filtered without the risk of starving engine components of oil when their lubrication is needed. In this way, particulates can be removed from the entire content of the lubricating system rather than from siphoned off portions of the oil content enabling the more efficient and effective reconditioning of the oil.

The filter comprises a filter element which can remove particulates which are larger than about 1 µm in size from the oil. In this way, the small and harmful contaminant debris such as soot particles are removed from the oil thereby reconditioning it. As a conventional internal combustion engine lubricating system normally comprises a coarse filter, the filter element compliments this by filtering the smaller particles.

Advantageously, as the filter element is removable from the filter and can be replaced, the apparatus can be reused without a loss in efficiency, the filter element being changed before becoming blocked with particulates and the flow rate of the oil through the filter being reducing significantly.

Conveniently, the pump is powered separately from the internal combustion engine. This means that the pump can be operated while the power to the internal combustion engine is switched off or without draining the power from a battery or other power supply associated with the internal combustion engine.

Preferably, oil is provided to the pump from an oil reservoir of the engine lubricating system through an inlet tube. The inlet tube is connectable to the pump at one of its ends, the other end of the inlet tube being a free end and being received into an opening in the oil reservoir which normally houses a dipstick. Preferably, the filtered oil is returned to the oil reservoir by an outlet tube which is connectable to the filter at one of its ends, the other end of the outlet tube being a free end. The free end of the outlet tube is received into a further opening in the oil reservoir. Beneficially, as conventional oil reservoirs are provided with at least one, and normally two openings, the oil reconditioning apparatus can be used with any conventional oil reservoir without the need for any adaptation to the oil reservoir.

In use, the free end of the inlet tube reaches a bottom of the oil reservoir. Advantageously, as this is where the denser particulates and sludge settles within the oil in the oil reservoir, the free end of the inlet tube will reach this debris which will be pumped to the filter and the debris filtered out of the oil.

An advantage with this oil reconditioning apparatus is that it is cheap and simple to manufacture as the individual components such as the pump and filter are widely available. A further advantage is that as the reconditioning apparatus is intended to operate while the car is at rest e.g. overnight, the oil can be filtered using low flow rates and pressures, and therefore requiring less power.

In a preferred embodiment, the apparatus further comprises means for measuring at least one property of the oil flowing through the filter or the pump in order to determine remaining service life and whether further filtration is required; the property being one or more of pH, flow rate, viscosity, torque, oil pressure and electrical resistance. In a further preferred embodiment, the apparatus further comprises control means for receiving the measured property and automatically switching off the pump if the measured property is within a pre-set range. In this way, the oil is filtered until it reaches an acceptable pre-set standard or condition, and no further power is consumed by the pump in continuing with the filtration. This is especially useful if the apparatus is left running overnight. This also provides a measure of certainty to the user who will know that the oil has been reconditioned to a certain set standard every time the apparatus is used. A further advantage is that the user can set the threshold ranges of the oil properties himself which might conceivably vary from user to user depending on the type of use of his internal combustion engine e.g. domestic use or fleet car use.

The invention also comprehends a method of reconditioning oil in an internal combustion engine lubricating system while the lubricating system is not in operation, the method comprising the steps of continuously and sequentially supplying oil from an oil reservoir of the engine lubricating system to a filter, filtering the oil through the filter, and returning the filtered oil to the engine lubricating system.

In a preferred embodiment, the method further comprises the steps of determining that the lubricating system is not in operation, and indicating the same. This means that a user can then manually activate or switch on the pump themselves.

In a further preferred embodiment, the method further comprises the step of automatically switching off the pump if the lubricating system is in operation. Advantageously, it is not left up to the user to manually switch on the pump.

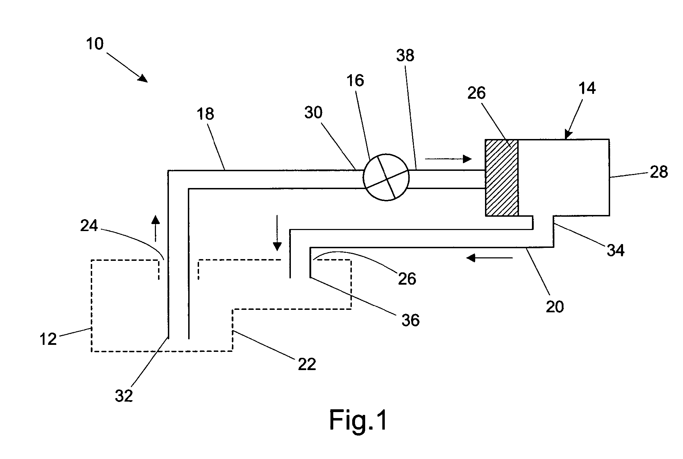

The invention will be described, by way example only, with reference to the accompanying drawing, in which:-
Figure 1 is a schematic of the oil reconditioning apparatus in accordance with a first embodiment of the invention.

Referring to Figure 1, there is shown an oil reconditioning apparatus 10 for reconditioning the oil stored in an oil reservoir 12 or sump of a vehicle, such as a car. References to cars in this specification should be construed to also include other vehicles such as motor bicycles, buses and trucks having an internal combustion engine, or industrial equipment having an internal combustion engine. By oil, it is meant any lubricating oil used in such combustion engines.

The oil reconditioning apparatus 10 comprises a filter 14, a pump 16, an inlet pipe 18, tube, conduit, channel or passage for supplying unfiltered oil from the oil reservoir 12 to the filter 14 via the pump 16, and an outlet pipe 20, tube, conduit, channel or passage through which the filtered oil is returned to the oil reservoir 12.

The oil reconditioning apparatus 10 is intended to be used to filter the entire volume of the oil contained in the oil reservoir 12, at least once, while the car is at rest i.e. when the car's own lubricating system is not in operation such as when the engine is switched off, or at least when a continuous or partial supply of oil to the engine or to other car parts is not required. Although not shown, the oil reconditioning apparatus 10 may also include means for determining that the lubricating system is not operation, means for indicating the same, and means for automatically shutting or switching the pump 16 off if the car's own lubricating system is detected to be in operation. Conveniently, as the oil reconditioning apparatus 10 requires no supervision once started, the oil reservoir content can be filtered overnight.

In conventional manner, the oil reservoir 12 is defined within a housing 22 (shown in part), the housing 22 being provided with a generally cylindrical opening 24 for housing a dipstick (not shown), and another opening or hole 26 for filling the oil reservoir. The filler opening 26 is normally sealed by a removable plug or lid (not shown). In use, the dipstick in the dipstick opening 24 is replaced by the inlet pipe 18, and the plug in the filling opening 26 replaced by the outlet pipe 20. Conveniently, the openings 24, 26 in the reservoir housing 12 need not be altered from known oil reservoir housing designs as the oil reconditioning apparatus 10 is adapted to be received into any of these existing openings.

The pump 16 is a standard pump having a 12V motor. As a low flow rate through the filter is desired, a pump achieving relatively low pressures is adequate. The pump 16 can either be powered from a power source external to the car e.g. a battery or mains power, or be connected to the car battery in a standard way, for example through a cigarette lighter socket in the cabin of the car.

The filter 14 is a standard filter used in bypass filter systems, although any other suitable filter can be used, and comprises a removable disposable filter media or element 26 and a filter body 28. Preferably, the filter element 26 can remove particles larger than about 1 µm from the oil, which is small enough to catch soot particles and the like. The filter element 26 is removable and can be changed in between uses. The surface area of the filter element 26 is large enough to allow the entire oil content in the oil reservoir 12 to be filtered at least twice without clogging. The oil reconditioning apparatus 10 is intended to be used while the car is within its service interval so that the oil should not be so dirty as to clog the filter element 26 quickly. The filter body 28 may incorporate time-release additives for further reconditioning the oil as it passes through the filter 14. Even though a 1 µm filter element is preferred, a filter element which is able pass through particles of less than 25 µm in size, in other words, a filter element which removes particles larger than 25 µm is also possible. Although, only one filter is shown, it is also possible to arrange a number of filters, able to filter out particles of different sizes, in series.

The inlet and outlet pipes 18, 20 are made of a flexible material which are compatible and stable when in contact with oil, resistant to high temperatures, and rigid enough to keep their shape, such as nylon or PTFE, or any other suitable material. The pipes 18, 20 are circular in cross-section and have an external diameter suitable for being received into the dipstick opening and filler opening. One end 30 of the inlet pipe 18 is connectable to the pump 16 and the other end 32 is a free end, being received in the dipstick opening 24 in use. The length of the inlet pipe 18 is long enough so that, in use, the free end 32 can reach the bottom of the reservoir 12 where the higher density wear particles sit. Similarly, one end 34 of the outlet pipe 20 is connectable to the filter 14 and the other end 36 is a free end, being received in the filler opening 36 in use.

In this embodiment, the oil is supplied to the filter 14 from the pump 16 by a further inlet pipe 38, tube, conduit, channel or passage which is connectable to the pump 16 at one of its ends and connectable to the filter at the other end. Alternatively, the pump 16 may be connectable directly with the filter 14, or the inlet pipe 18 may extend through the pump 16 and be connectable with the filter 14.

In use, the inlet pipe 18 and the outlet pipe 20 are positioned in the oil reservoir 12 as described above. Alternatively, the inlet pipe 18 and the outlet pipe 20 may be positioned into the same opening of the oil reservoir 12. Switching or turning the pump 16 on results in the oil being drawn or extracted from the oil reservoir 12 and then pumped through the filter 14 where particles 1 µm or smaller are filtered out of the circulating oil by collecting in the filter element 26. The filtered oil is then returned to the oil reservoir 12 via the outlet pipe 20. The flow rate of the oil is determined by the pump speed and power and also the internal diameter of the inlet pipe 18. A 12V pump should result in a slow enough flow rate to not rupture or damage the filter element. However, if required, the flow rate through the filter 14 can be further controlled by a metering jet (not shown) positioned upstream of the filter 14 . As mentioned above, the oil reconditioning apparatus 10 can be left to run overnight or at any other time unsupervised, while the car is not in use.

The oil reconditioning apparatus 10 may also be used as a diagnostic tool, to assess or monitor the status of the engine by assessing or monitoring the condition of the oil. For example, an unusually large amount of wear debris and contaminants in the oil may be an indication of a serious problem within the engine such as failure of an engine component or part. The early indication of a problem can allow preventative measures to be taken and avoid further damage to the engine. Monitoring the status of car engines would be particularly useful in the case of fleet cars whose conditions of usage are probably more unpredictable than cars for domestic use.

The level of particulates, debris, and other solid contaminants and build up in the oil can be assessed in a number of ways. In an alternative preferred embodiment, a measuring means in the form of a weighing device may be used to measure the dry weight of the disposable filter element after the oil has been filtered through it. This weight is then compared with previous weight readings to establish the level of contaminant build up in the oil. In alternative embodiments, oil pressure, flow rate and/or torque across the filter during filtering are measured by using appropriate measuring means, with an increase in flow resistance being suggestive of the amount of contaminants and debris collecting in the disposable filter element and hence the contaminant content of the oil. Measurement of electrical resistance can also be used to indicate the presence and amount of metal debris in the filtrate. The method of measuring the level of particulate build up is not limited to the examples given here, and it will be appreciated that other methods are also possible. In alternative embodiments, an LED or a buzzer is incorporated into the system which lights up or sounds when the oil pressure or flow rate drops below a certain threshold limit indicating that the disposable filter element requires replacement.

In another alternative embodiment, the condition of the oil in terms of the degradation of its properties is monitored by measuring the viscosity and/or acidity of the oil using known techniques and equipment such as a viscometer and/or pH meter. The viscometer and/or pH meter can be connected to an indicator such an LED or a buzzer to indicate when the viscosity is above a threshold level and/or when the pH meter is below a threshold level.

In response to any of the readings of the embodiments of this invention, the user may continue to filter the oil using the reconditioning apparatus, change the oil or enhance the reconditioning of the oil by adding additives to the oil so that the pH reaches an acceptable level. In a further embodiment, this latter response is automated in that additives are added automatically to the oil in response to the pH level, or other properties, of the oil.

In a still further embodiment, the oil reconditioning apparatus further comprises a feed-back system including control means which can be programmed so that the pump is automatically switched off when any of the readings described in any of the previous embodiments fall within an acceptable range indicating that the oil has been adequately reconditioned or outside that range indicating that the oil requires replacement. This embodiment has the particular advantage of being able to leave the reconditioning apparatus to run unsupervised and also conserve energy.

In view of these and other variants, reference should be made to the appended claims and other general or conceptual statements herein rather than to the foregoing specific description as indicating the scope of the invention.

## Claims

1. An apparatus for reconditioning oil in an internal combustion engine lubricating system while the lubricating system is not in operation, the apparatus comprising:
means for determining that the lubricating system is not in operation;
a filter (14) for filtering the oil;
a pump (16) for supplying the oil to be filtered to the filter (14) from the engine lubricating system; and
a return path for returning the filtered oil to the engine lubricating system.

2. The apparatus of Claim 1, further comprising means for indicating that the lubricating system is not in operation.

3. The apparatus of Claim 1 or Claim 2, further comprising means for automatically switching off the pump 16 if the determining means verifies that the lubricating system is in operation.

4. The apparatus of any one of Claims 2 or 3, further comprising means for determining that the lubricating system is in operation and means for activating the pump (16) if the lubricating system is not in operation.

5. The apparatus of any one of the preceding claims, wherein the lubricating system is not in operation when the internal combustion engine is switched off.

6. The apparatus of any one of the preceding claims, wherein the filter (14) comprises a filter element (26) for removing particulates larger than about 25 µm in size from the oil.

7. The apparatus of Claim 6, wherein the filter element (26) can remove particulates which are larger than about 1 µm in size from the oil.

8. The apparatus of any one of the preceding claims, wherein the filter element (26) is removable from the filter (14) and can be replaced.

9. The apparatus of any one of the preceding claims, wherein the pump (16) is powered separately from the internal combustion engine.

10. A method of reconditioning oil in an internal combustion engine lubricating system while the lubricating system is not in operation, the method comprising the steps of continuously and sequentially:
supplying oil from an oil reservoir (12) of the engine lubricating system to a filter (14);
filtering the oil through the filter (14); and
returning the filtered oil to the engine lubricating system.
